# EUROPÄISCHE PATENTSCHRIFT

(11) **EP 0 563 979 B1**
(45) Veröffentlichungstag und Bekanntmachung des Hinweises auf die Patenterteilung: **08.11.1995**
(21) Anmeldenummer: 93105488.6
(22) Anmeldetag: 02.04.1993
(51) Int. Cl.: B23B 31/02, B23B 31/40, B23Q 1/25, B23Q 3/12

(54) **Schnittstelle**
Coupling
Raccord

(30) Priorität: 02.04.1992 DE 4211034; 27.05.1992 DE 4217657
(43) Veröffentlichungstag der Anmeldung: 06.10.1993
(73) Patentinhaber: MAPAL Fabrik für Präzisionswerkzeuge Dr. Kress KG, D-73405 Aalen (DE)
(72) Erfinder:
(74) Vertreter: Gleiss & Grosse

(56) Entgegenhaltungen:
- DD-A- 232 001
- DE-A- 3 410 563
- DE-A- 3 616 230
- GB-A- 2 171 937
- US-A- 4 804 301

## Beschreibung

Die Erfindung betrifft eine auch als Schnittstelle bezeichnete Spanneinrichtung zwischen einem Aufnahmekörper und einem Einsteckkörper, insbesondere zwischen einem Werkzeugkörper und einem den Werkzeugkörper haltenden Spannschaft einer Werkzeugmaschine gemäß dem Oberbegriff des Anspruchs 1, wie aus DE-A-34 10 563 bekannt. Im folgenden wird mit dem Begriff Schnittstelle auch eine Verbindungsstelle zwischen einem Werkzeugträger und einem Zwischenstück beziehungsweise einem Zwischenstück und einem das Zwischenstück haltenden Spannschaft einer Werkzeugmaschine verstanden. Eingeschlossen sind auch Verbindungsstellen zwischen zwei Zwischenstücken der hier angesprochenen Art. In diesem Zusammenhang werden als Einsteckkörper auch Einbau- und Vorsatzflansche bezeichnet, in die ein Werkzeugträger einsteckbar ist.

Bei der Verbindung zwischen einem Aufnahme- und einem Einsteckkörper ist es häufig problematisch, daß nach einem Austausch eines der beiden Teile, beispielsweise nach einem Werkzeugtausch in einer Werkzeugmaschine, die zuvor eingestellten Maße nicht mehr exakt geben sind. Bevor also eine Weiterbearbeitung eines Werkstücks möglich ist, bedarf es häufig einer Justage und Einstellung der gewünschten Werte. Es zeigt sich auch in zahlreichen Anwendungsfällen, daß die an einer Spanneinrichtung aufgebrachten Einspannkräfte nicht hoch genug sind, die beiden zu verbindenden Teile unverrückbar festzuhalten. Durch eine Relativbewegung der der Spanneinrichtung zugeordneten Teile können ebenfalls Abweichungen der gewünschten Bearbeitungsmaße eintreten. Darüber hinaus ist nachteilig, daß die beiden Teile der Spanneinrichtung nach dem Verspannen häufig schwer lösbar sind. Bei einem Einsteckkörper mit zylindrischem Schaft kann dies bei Verunreinigungen der Spanneinrichtung der Fall sein. Bei Einsteckkörpern mit kegeligem Schaft wird dieser nach dem Verspannen der beiden Teile der Spanneinrichtung so fest in den Aufnahmekörper hineingezogen, daß er aufgrund der Haftreibung (Selbsthemmung) nach dem Lösen der Spannvorrichtung schwer zu entfernen ist.

Es ist daher Aufgabe der Erfindung, eine Spanneinrichtung gemäß Oberbegriff des Anspruch 1 so zu verbessern, daß während der Bearbeitung eines Werkstücks und bei einem Austausch der der Spanneinrichtung zugeordneten Teile eine Justierung entfallen kann und eine leichte Trennung der Teile möglich ist.

Diese Aufgabe wird mit Hilfe der in Anspruch 1 genannten Merkmale gelöst.

Die Spannvorrichtung weist zwei am Aufnahmekörper angebrachte Spannkörper auf, die auf geeignete Weise in zueinander entgegengesetzten Richtungen verlagerbar sind und auf der Innenseite des Paßzapfens eingreifen, der am Einsteckkörper vorgesehen ist. Die Spannkörper weisen dabei derartige Spannflächen auf, die im Bereich des Scheitels der Spannkörper eine Abflachung oder Ausnehmung besitzen, so daß die zu dem Scheitel in einem Abstand angeordneten Bereiche, die Außenbereiche der Spannflächen beim Verspannen der Spannkörper die Innenfläche des Paßzapfens berühren;während die Spannfläche im Bereich des Scheitels die Innenfläche des Paßzapfens nicht berühren. Hierdurch wird sehr vorteilhaft erreicht, daß im verspannten Zustand der Spanneinrichtung bzw. sich ein sehr kurzer Kraftweg ergibt und durch die anliegenden Außenbereiche der Spannfläche der Spannkörper eine Vier-Flächen-Anlage erreicht wird, die eine günstige Kraftübertragung gestattet, ohne daß große Flächen, hier die Spannfläche der Spannkörper und die Innenfläche des Paßzapfens genau passend zueinander rotationssymmetrisch ausgearbeitet sein müssen. Durch die Kraftverteilung auf quasi vier Spannflächen-Bereiche wird sehr vorteilhaft erreicht, daß der Paßzapfen über seinen Umfang beispielsweise mit einer Kraft beaufschlagt wird, so daß sich dieser relativ dünnwandige hohle Paßzapfen gleichförmig aufweiten kann und damit eine optimale kraftschlüssige Verbindung zwischen dem Aufnahmekörper und dem Einsteckkörper ergibt. Die der Schnittstelle zugeordneten Teile lassen sich also sehr fest miteinander verbinden, so daß eine hohe Wiederholungsgenauigkeit erreicht wird. Der Einsteckkörper beziehungsweise der Werkzeugträger ist relativ einfach aufgebaut, weil die Spannvorrichtung an dem gegenüberliegenden Aufnahmekörper beziehungsweise Spannschaft vorgesehen ist.

Bei einer bevorzugten Ausführungsform der Schnittstelle sind die Spannkörper an einem in die Ausnehmung des Aufnahmekörpers ragenden Spanndorn angebracht. Das Werkzeug ist daher einfach aufgebaut und kostengünstig erstellbar.

Bei einer weiteren bevorzugten Ausführungsform der Schnittstelle umgreifen die Spannkörper der Spannvorrichtung den Spanndorn. Damit läßt sich eine sehr kleine Bauform der Schnittstelle realisieren, so daß auch Werkzeuge kleinen Durchmessers mit einer derartigen Schnittstelle ausrüstbar sind.

Eine weitere bevorzugte Ausführungsform der Schnittstelle zeichnet sich dadurch aus, daß die Spannkörper gleich und vorzugsweise in sich symmetrisch ausgebildet sind. Auf diese Weise kann die Schnittstelle relativ preiswert realisiert werden.

Weiterhin wird eine Ausführungsform der Schnittstelle bevorzugt, bei der die die Spannkörper bewegende Betätigungseinrichtung als eine durchgehende Spannschraube ausgebildet ist, die in einer den Spanndorn in radialer Richtung durchdringenden Bohrung verläuft und mit je einem Gewindeabschnitt mit einem Innengewinde in den Spannkörpern zusammenwirkt. Die Gewindeabschnitte der Spannschraube sind gegensinnig ausgebildet, das heißt, auf der einen Seite der Spannschraube ist ein Linksgewinde auf der gegenüberliegenden Seite ein Rechtsgewinde vorgesehen.

Bevorzugt wird weiterhin ein Ausführungsbeispiel der Schnittstelle, das sich durch eine durchgehende Kühl- und Schmiermittelzufuhr auszeichnet. Diese umfaßt den Aufnahme- und Einsteckkörper durchdringende Kanalabschnitte so wie einen diese Abschnitte verbindenden Leitungsabschnitt, der die Spannvorrichtung überbrückt. Damit ist die Schnittstelle universell einsetzbar, also auch bei Werkzeugen, die eine Kühl- und Schmiermittelzufuhr aufweisen.

In einer besonders bevorzugten Ausführungsform zeichnet sich die Schnittstelle durch eine Ausstoßvorrichtung aus, die die beiden zugehörigen Teile im gelösten Zustand der Spannvorrichtung so auseinanderschiebt, daß der Einsteckkörper leicht aus dem Aufnahmekörper herausnehmbar ist. Eine derartige Schnittstelle zeichnet sich dadurch aus, daß einerseits hohe Spannkräfte aufgebaut werden, die eine sichere Verankerung des Einsteckkörpers im Aufnahmekörper gewährleistet, und die andererseits beim Lösen der Spannvorrichtung ein erstes Auseinanderschieben der beiden Teile der Schnittstelle sicherstellt, so daß eine Haftreibung zwischen den beiden Teilen überwunden und so eine leichte Trennung der Schnittstelle möglich wird.

Besonders bevorzugt wird eine Ausführungsform der Schnittstelle, bei der die Ausstoßvorrichtung ein von den Spannkörpern betätigbares Ausstoßelement aufweist, also einfach aufgebaut ist. Das Ausstoßelement wird unmittelbar von einem Spannkörper betätigt, sofern dieser in seine Öffnungsstellung verlagert wird.

Weiterhin wird eine Ausführungsform der Schnittstelle bevorzugt, bei welcher ein Spannkörper mit einer Betätigungsschräge versehen ist, die auf das eine Ende des Ausstoßelements wirkt. Die in radialer Richtung verlagerbaren Spannkörper bewirken auf konstruktiv einfache Weise eine axiale Verschiebung des Ausstoßelements und damit eine Lösung der beiden der Schnittstelle zugeordneten Teile. Damit ist eine einfache und preiswerte Lösung gegeben.

Nach einer weiteren bevorzugten Ausführungsform ist schließlich vorgesehen, daß die Schnittstelle sich dadurch auszeichnet, daß die Ausstoßvorrichtung einen Stift aufweist, der in einem Spanndorn der Spannvorrichtung geführt ist. Damit ist also die Ausstoßvorrichtung in den Spanndorn integriert und sehr kompakt aufgebaut, ohne daß es zu einer wesentlichen Schwächung des Spanndorns kommt.

Weitere Ausgestaltungen der Schnittstelle ergeben sich aus den übrigen Unteransprüchen.

Die Erfindung wird im folgenden anhand der Zeichnungen näher erläutert. Es zeigen:
- Figur 1: einen durch die Längsachse der Spanneinrichtung verlaufenden Schnitt;
- Figur 2: einen Querschnitt senkrecht zur Längsachse der Spanneinrichtung;
- Figur 3: einen Längsschnitt durch einen Auschnitt einer Spanneinrichtung in einer weiteren Ausführung;
- Figur 4: einen Querschnitt durch die Spannvorrichtung der Spanneinrichtung gemäß Figur 3 und
- Figur 5: eine erste perspektivische Ansicht eines Spannkörpers und
- Figur 6: eine zweite perspektivische Ansicht des Spannkörpers gemäß Figur 5.

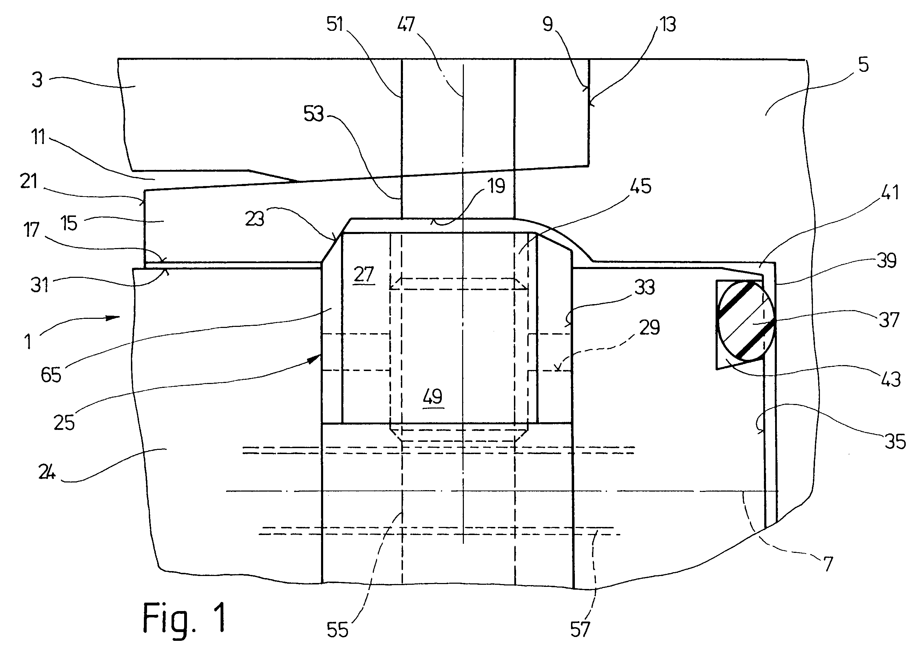

Bei der Wiedergabe des Längsschnitts in Figur 1 sind lediglich wesentliche Teile dargestellt. Beispielsweise sind rechts und links von der, auch als Schnittstelle bezeichneten, Spanneinrichtung vorhandene Bereiche der miteinander verbundenen Teile abgebrochen. Darüber hinaus ist lediglich der Teil der Schnittstelle gezeichnet der oberhalb einer Längs- beziehungsweise Drehachse der Schnittstelle angeordnet ist.

Im Bereich der Schnittstelle 1 wird ein Aufnahmekörper 3 mit einem Einsteckkörper 5 verbunden. Bei den genannten Teilen handelt es sich insbesondere um einen in einen Spannschaft einer Werkzeugsmaschine eingesteckten Werkzeugträger, wobei der Spannschaft als Aufnahmekörper bezeichnet wird und der Werkzeugträger als Einsteckkörper.

Der Aufnahmekörper weist eine gegenüber der Längsbeziehungsweise Drehachse 7 in radialer Richtung verlaufende auch als Planfläche bezeichnete Ringfläche 9 auf, die quasi die Stirnfläche des Aufnahmekörpers 3 bildet. In die Stirnfläche ist eine Ausnehmung 11 eingebracht.

Der Werkzeugträger beziehungsweise Einsteckkörper 5 weist eine senkrecht zur Drehachse 7 verlaufende Anlagefläche 13 auf, die mit der Ringfläche 9 zusammenwirkt. Die ringförmig ausgebildete Anlagefläche 13 umgibt einen hohl ausgebildeten auch als Hohlschaft bezeichneten Paßzapfen 15, dessen Außenfläche konisch ausgebildet ist und sich ausgehend von der Anlagefläche 13 leicht verjüngt. In die Innenfläche 17 des Paßzapfens ist eine Ringnut 19 eingebracht, die auf ihrer der Stirnseite 21 des Paßzapfens zugewandten Seite eine erste Anlagefläche 23 aufweist. Diese schließt mit der Senkrechten auf der Innenfläche 17 einen spitzen Winkel von beispielsweise 30° ein.

In das Innere des Paßzapfens 15 ragt ein Spanndorn 24 der eine Spannvorrichtung 25 trägt, die hier zwei Spannkörper aufweist, von den hier ein erster Spannkörper 27 dargestellt ist.

Der Spanndorn 24 ist mit einer Nut 29 versehen, in welcher der erste Spannkörper 27 angeordnet ist. Die Lage der Nut 29 ist -in axialer Richtung beziehungsweise in Richtung der Drehachse 7 gesehen- so gewählt, daß der die Außenfläche 31 des Spanndorne 24 überragende Spannkörper 27 im Bereich der auf der Innenfläche 17 des Paßzapfens 15 vorgesehenen Ringnut 19 angeordnet ist. Die Breite der Nut 29 ist so gewählt, daß die Spannkörper, hier also der erste Spannkörper 27, im verspannten Zustand der Schnittstelle 1 auf der in Figur 1 dargestellten rechten Seite der Nut beziehungsweise an der rechten Nutflanke 33 anliegt und die Nut über die gesamte Breite praktisch ausfüllt.

Die Länge des Spanndorns 24 ist so gewählt, daß eine in seine Stirnfläche 35 eingebrachte als O-Ring 37 ausgebildete Dichtungseinrichtung an dem Grund 39 des von dem hohlen Paßzapfen 15 umgebenen Raums 41 im Einsteckkörper 5 dichtend anliegt, also einer Kompressionskraft unterworfen wird. Zur Erleichterung der Montage und als Sicherung gegen Verluste ist der O-Ring 37 in einer geeigneten in die Stirnseite 35 eingebrachten Nut 43 angeordnet.

Den ersten Spannkörper 27 durchdringt eine ein Innengewinde aufweisende Bohrung 45, deren Mittelachse 47 senkrecht auf der Längs- beziehungsweise Drehachse 7 der Schnittstelle 1 steht. In die Bohrung 45 ist eine als Betätigungseinrichtung für die Spannvorrichtung 25 dienende Spannschraube 49 eingesetzt, die mit ihrem Außengewinde mit dem Innengewinde der Bohrung 45 kämmt.

Die Spannschraube 49 ist durch die Wandung der Schnittstelle 1 zugänglich, indem einerseits in die Wand des Aufnahmekörpers 3 eine Bohrung 51 eingebracht ist, die mit einer Bohrung 53 im Paßzapfen 15 fluchtet. Die Mittelachsen dieser beiden Bohrungen fallen mit der Mittelachse 47 der Bohrung 45 im ersten Spannkörper 27 zusammen. Die Spannschraube 49 durchdringt den Spanndorn 24, der mit einer entsprechenden Durchgangsbohrung 55 versehen ist. Die Mittelachse der Durchgangsbohrung fällt wiederum zusammen mit der Mittelachse 47.

Der Spanndorn 24 ist drehfest im Aufnahmekörper 3 angeordnet, so daß die Fluchtung der in der Wandung vorgesehenen Bohrung 51 mit der Durchgangsbohrung 55 vorgegeben werden kann. Der Einsteckkörper 5 ist nur in einer bestimmten Ausrichtung gegenüber dem Aufnahmekörper in diesen einsteckbar. Dies kann beispielsweise durch bestimmte Vorsprünge und Nuten am Paßzapfen 15 beziehungsweise an der Innenwandung der Ausnehmung 11 auf bekannte Weise erreicht werden. Damit ist im eingesteckten Zustand sichergestellt, daß die Bohrung 53 in dem hohlen Paßzapfen 15 mit der Bohrung 51 und der Durchgangsbohrung 55 fluchtet. Da der erste Spannkörper 27 durch die Spannschraube 49 drehfest am Spanndorn angebracht ist, bedarf es keiner weiteren Vorkehrungen, um die Fluchtung der Bohrung 45 im ersten Spannkörper 27 gegenüber den übrigen Bohrungen sicherzustellen.

Die Schnittstelle 1 ist mit einer durchgehenden Kühl- und Schmiermittelzufuhr versehen. Dazu ist der Aufnahmekörper 3 mit einem hier nicht dargestellten, beispielsweise konzentrisch zur Drehachse 7 verlaufenden Kanalabschnitt versehen. Entsprechend weist der Einsteckkörper 5 seinerseits einen hier nicht wiedergegebenen, beispielsweise ebenfalls konzentrisch zur Drehachse 7 verlaufenden Kanalabschnitt auf.

Der Bereich der Spannvorrichtung 25 wird durch ein in Richtung der Drehachse 7 der Schnittstelle 1 verlaufenden durch ein Rohr gebildeten Leitungsabschnitt 57 überbrückt, der in Figur 1 lediglich gestrichelt dargestellt ist. Dieser Leitungsabschnitt ist bei dem hier dargestellten Ausführungsbeispiel der Schnittstelle exzentrisch angeordnet, das heißt, er liegt -anders als die Kanalabschnitte in dem Aufnahmekörper 3 beziehungsweise im Einsteckkörper 5- nicht im Bereich der Drehachse 7. Er ist durch geeignete Bohrungen aber mit den genannten Kanalabschnitten so verbunden, daß in den Kanalabschnitt des Aufnahmekörpers eingeleitetes Kühl- beziehungsweise Schmiermittel über den Leitungsabschnitt 57 in den Kanalabschnitt des Einsteckkörpers geleitet wird und zur Kühlung und Schmierung beispielsweise eines Schneidwerkzeugs zur Verfügung steht.

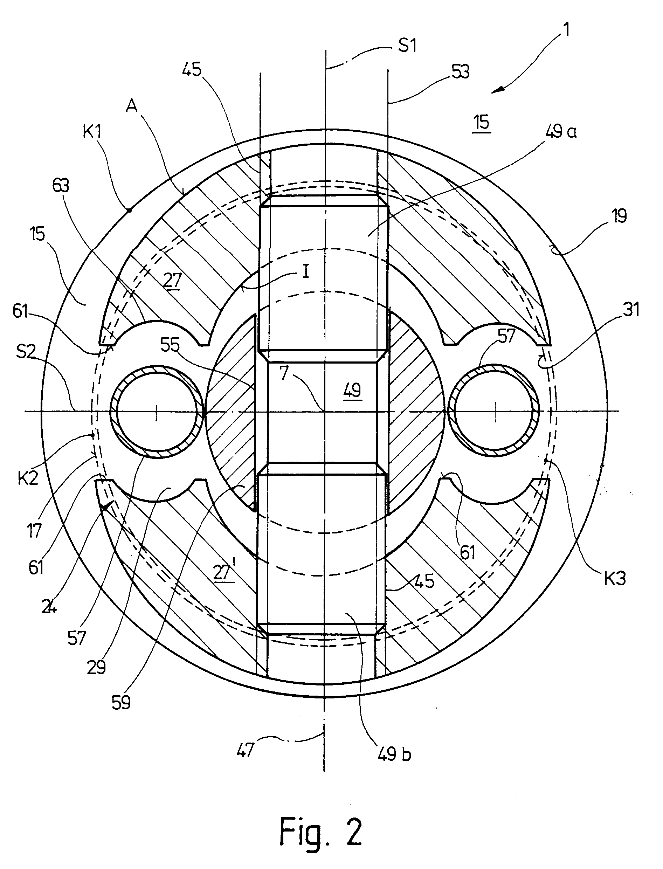

Die Anordnung des Leitungsabschnitts 57 ergibt sich aus der in Figur 2 wiedergegebenen Querschnitt-Darstellung deutlicher.

Bei dem Querschnitt gemäß Figur 2 sind in Figur 1 wiedergegebene Teile mit gleichem Bezugszeichen versehen, so daß auf die Beschreibung zu Figur 1 verwiesen werden kann. Die Darstellung der Schnittstelle 1 in Figur 2 beschränkt sich auf das Wesentliche: Es sind die am Spanndorn 24 angebrachten Spannkörper 27 und 27' der Spannvorrichtung 25 wiedergegeben. Durch eine erste Kreislinie K1 ist der Grund der in den Paßzapfen 15 eingebrachten Ringnut 19 angedeutet, in die die Spannkörper 27 und 27' im verspannten Zustand, wie er in Figur 1 wiedergegeben ist, eingreifen.

Durch eine zweite Kreislinie K2 ist die Innenfläche 17 des Paßzapfens 15 angedeutet. Eine dritte Kreislinie K3 kennzeichnet die Außenfläche 31 des Spanndorns 24. Es ist ersichtlich, daß der Durchmesser im Bereich der Außenfläche 31 geringer gewählt ist als der Durchmesser im Bereich der Innenfläche 17, so daß der hohle Paßzapfen 15 so in die Ausnehmung 11 des Aufnahmekörpers 3 eingesteckt werden kann, daß der Spanndorn 24 im Inneren des Paßzapfens zu liegen kommt.

Figur 2 zeigt, daß die Spannvorrichtung 25 zwei identisch ausgebildete Spannkörper 27 und 27' aufweist, von denen der erste Spannkörper 27 bereits in Figur 1 gezeigt und beschrieben ist. Die Spannkörper sind in sich symmetrisch ausgebildet, also spiegelbildlich zur senkrecht durch die Drehachse 7 verlaufende Symmetrieachse S1. Außerdem sind die beiden Spannkörper symmetrisch zur horizontal durch die Drehachse 7 verlaufenden Symmetrieachse 52 angeordnet.

Die beiden Spannkörper 27 und 27' umgeben den Spanndorn 24 quasi halbschalenförmig und weisen eine halbkreisförmig ausgebildete Außenfläche A auf. Auch ihre Innenflächen I sind halbkreisförmig ausgebildet, wobei der Außendurchmesser der Spannkörper 27 und 27' so gewählt ist, daß die Spannkörper im angelegten, entspannten Zustand die Außenfläche 31 des Spanndorns 24 nicht oder nur so wenig überragen, daß der Spanndorn mit den angelegten Spannkörpern in das Innere des Paßzapfens 15 hineingleiten kann.

Die Nut 29 im Spanndorn 24 ist so tief ausgebildet, daß der Kernbereich 59, der nach dem Einbringen der Nut in den Spanndorn verbleibt, im angelegten Zustand der Spannkörper 27 und 27' zwischen deren Innenflächen I angeordnet ist. Vorzugsweise sind die Krümmungsradien der kreisbogenförmigen ausgebildeten Innenflächen I so gewählt, daß die Spannkörper mehr oder weniger flächig auf dem Kernbereich 59 aufliegen, wenn die Spannkörper -entgegen der Darstellung- in den Figuren 1 und 2, sich in ihrer angelegten Stellung befinden.

Die einander zugewandten Stirnseiten 61 der Spannkörper 27 und 27' sind im verspannten Zustand der Schnittstelle 1, wie er in Figur 2 wiedergegeben ist, in einem Abstand zueinander angeordnet. Werden die Spannkörper 27 und 27' durch Betätigung der Spannschraube 49 in ihre Entriegelungsstellung gebracht, so daß sie am Grund der Nut 29 anliegen, so nähern sich die Stirnseiten 61 der Spannkörper 27 und 27' einander an. Die Stirnseiten sind bei dem hier dargestellten Ausführungsbeispiel mit kreisbogenförmig ausgestalteten Ausnehmungsbereichen 63 versehen, in die rechts und links der Symmetrieachse S1 angeordnete Leitungsabschnitte 57 der Kühl- und Schmiermittelzufuhr in den Ausnehmungsbereichen zu liegen kommen. Es ist selbstverständlich auch möglich, den Durchmesser der hier rohrförmig ausgebildeten Leitungsquerschnitte so zu verringern, daß diese in einem verbleibenden Freibereich zwischen den Stirnseiten 61 angeordnet sind, wenn die Spannkörper sich in angelegtem Entriegelungszustand befinden. Die Tiefe der hier ringförmig umlaufend ausgebildeten Nut 29 ist so gewählt, daß die Leitungsabschnitte 57 gänzlich innerhalb der Nut verlaufen. Dazu ist der Außendurchmesser der Leitungsabschnitte etwas kleiner ausgelegt als die Tiefe der Nut 29. Dadurch liegen die Leitungsabschnitte geschützt im Bereich der Nut und stören das Einfügen des Einsteckteils in den Aufnahmekörper nicht. Anstelle zweier symmetrisch angeordneter Leitungsabschnitte kann die Schnittstelle auch lediglich mit einem Leitungsabschnitt versehen werden, wenn ein geringer Kühl- und Schmiermitteldurchsatz ausreichend ist. Der Außendurchmesser der Leitungsabschnitte kann etwas größer gewählt werden, wenn der Kernbereich 59 im Bereich der Leitungsabschnitte mit einer Ausnehmung versehen ist, so daß die Wandung der Leitungsabschnitte weiter in Richtung auf die Drehachse 7 der Schnittstelle ausgedehnt werden kann.

Aus Figur 2 ist ersichtlich, daß die als Betätigungseinrichtung für die die beiden Spannkörper 27 und 27' umfassende Spannvorrichtung 25 dienende Spannschraube 49 beide Spannkörper und auch den Kernbereich 59 des Spanndorns 24 durchdringt. Die Spannschraube 49 ist, wie bereits anhand von Figur 1 erläutert, durch eine Bohrung 53 im Paßzapfen 15 zugänglich, die in Figur 2 lediglich angedeutet ist. Die Mittelachse dieser Bohrung fällt zusammen mit der Mittelachse der Bohrungen in den Spannkörpern und mit der der Durchgangsbohrung 55 im Spanndorn 24. Die Mittelachse 47 fällt in Figur 2 außerdem zusammen mit der Symmetrieachse S1.

Die Spannschraube 49 weist zwei Gewindeabschnitte 49a und 49b auf, die mit einem Innengewinde in den Spannkörpern 27 und 27' kämmen. Die Gewindeabschnitte 49a und 49b sind gegensinnig ausgebildet, so daß bei einer Betätigung der Spannschraube 49 die Spannkörper diametral zueinander bewegt werden, das heißt, sich einmal von der Drehachse 7 nach außen und bei einer entgegengesetzten Drehung der Spannschraube auf die Drehachse 7 zu bewegen.

Wenn durch eine Drehbewegung der Spannschraube 49 die Spannkörper 27 und 27' nach außen in ihre Verriegelungsstellung gefahren werden, liegen auf den Spannkörpern vorgesehene Spannflächen 65 (siehe Figur 1) an der ersten Anlagefläche 23 an. Wird die Spannschraube weitergedreht, wird durch die Anlage der Spannflächen aneinander eine Spannkraft aufgebaut, durch die der Paßzapfen 15 in das Innere der Ausnehmung 11 im Einsteckkörper 3 gezogen wird. Es wird also eine parallel zur Drehachse 7 wirkende Spannkraft aufgebaut. Dabei stützen sich die Spannkörper an der -in Figur 1 ersichtlichen- rechten Nutflanke 33 ab. Dadurch werden auch die Ringflächen 9 und die Anlageflächen 13 fest aneinandergepreßt, so daß eine exakte axiale Ausrichtung der beiden Körper der Schnittstelle 1 sichergestellt ist.

Der Paßzapfen 15 ist besonders im Bereich der Ringnut 19, aber auch in seinem übrigen Bereichen sehr dünnwandig ausgebildet, so daß er eine relativ elastische Wand aufweist.Durch die Anpressung der Spannflächen 65 an die Anlagefläche 23 findet eine Aufweitung des hohlen Paßzapfens 15 statt, so daß dessen Außenfläche an die Innenfläche der Ausnehmung 11 gepreßt wird. Dadurch ergibt sich eine optimale Stabilisierung beziehungsweise Versteifung der Schnittstelle 1.

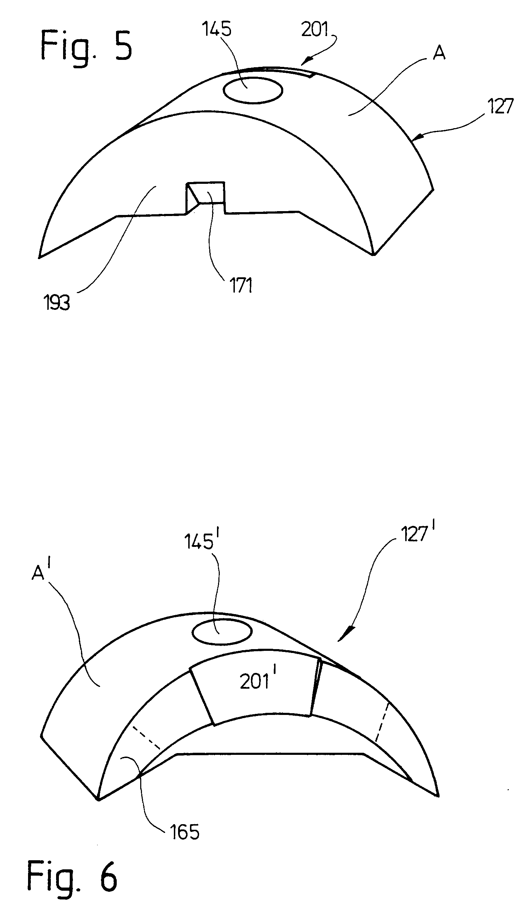

Die Außenfläche A der Spannkörper 27 und 27' ist insbesondere im Bereich der in Figur 1 gezeigten Spannflächen 65 so gewählt, daß in einem Abstand zum Scheitel der Spannkörper eine flächige Anlage der Spannflächen 65 an der Anlagefläche 23 sichergestellt ist und sehr hohe Spannkräfte aufgebaut werden. Mit anderen Worten, wird hiermit eine bereichsweise Anlage Spannfläche A, der Spannkörper an den Preßzapfen erreicht. Bei dem hier dargestellten Ausführungsbeispiel lassen sich auch bei einer Handbetätigung der Spannschraube 49 insgesamt axiale Spannkräfte von ca. 3.900 kp aufbauen. Die bereichsweise Anlage der Spannkörper 27, 27' beziehungsweise ihrer Spannflächen an der ersten Anlagefläche 23 des Paßzapfens 15 wird durch eine Ausnehmung oder Abflachung im Scheitelbereich der Spannkörper erreicht, die insbesondere in der Spannfläche vorgesehen ist, sich aber auch über die gesamte Außenfläche der Spannkörper erstrecken kann. Auf die Erstreckung beziehungsweise Ausdehnung der Ausnehmung beziehungsweise Abflachung wird unten anhand von Figur 6 nach genauer eingegangen.

Aus dem oben Gesagten wird ohne weiteres ersichtlich, daß aufgrund der Ausgestaltung der Spannkörper eine bereichsweise Anlage, das heißt, eine sogenannte Vier-Flächen-Anlage, zwischen der Spannfläche 65 der Spannkörper 27, 27' und der ersten Anlagefläche 23 sichergestellt ist, wobei die Spannkräfte sich über vier vorzugweise gleichmäßig beziehungsweise symmetrisch über den Umfang verteilte Winkelbereiche erstrecken und zu einer sicheren Verspannung der schnittstelle führen.

Wenn die Spannschraube zur Verlagerung der Spannkörper in ihre Einspannstellung betätigt wird, berühren die Spannkörper -aufgrund der Abflachung beziehungsweise Ausnehmung im Scheitelbereich der Spannkörper, also im Bereich des Austritts der Bohrung 45 in der Außenfläche A- die Innenfläche des Paßzapfens mit den äußeren Bereichen der Spannfläche, das heißt, mit den Bereichen der Spannflächen, die in einem Abstand zum Scheitelbereich liegen. Dadurch werden Spannkräfte in einem Abstand von der Bohrung aufgebaut.

Die durch die Spannkörper aufgebauten Spannkräfte können dadurch variiert werden, daß deren Kreisbogenabschnitt der Außenfläche A an die jeweiligen Spannverhältnisse angepaßt wird. Der Öffnungswinkel des Kreisbogens der Außenfläche A beziehungsweise Spannfläche kann in einem Bereich von etwa 90° - 180° variiert werden, vorzugsweise wird jedoch, um eine besonders gute Anlage der bei der Verspannung wirkenden Flächen sicherzustellen, ein Öffnungswinkel von ca. 180° gewählt, wie er aus Figur 2 ersichtlich ist.

Es ist letztlich auch möglich, als Betätigungseinrichtung für die Spannkörper, separate je einem Spannkörper zugeordnete Spannschrauben zu verwenden, die dann durch entsprechende Bohrungen im Paßzapfen beziehungsweise in der Außenwand des Aufnahmekörpers erreichbar sein müssen. Eine besonders gleichmäßige Verspannung und einfache Betätigung ergibt sich jedoch durch das anhand der Figuren erläuterte Ausführungsbeispiel, das sich durch eine einzige durchgehende Spannschraube auszeichnet, die beide Spannkörper erfaßt.

Es wurde oben bereits ausgeführt, daß bei der Auswärtsbewegung der Spannkörper eine Aufweitung der relativ elastischen Wand des Paßzapfens 15 erfolgt. Die Ausweitung kann dadurch begünstigt werden, daß die Wandung des Paßzapfens besonders dünn gewählt wird. Zusätzlich können in Längsrichtung beziehungsweise in Richtung der Drehachse 7 verlaufende Schlitze in die Wand des Paßzapfens eingebracht werden, deren Breite und Tiefe -das heißt, deren Ausdehnung in axialer Richtung- an die gewünschte Flexibilität des Paßzapfens anpaßbar sind. Insgesamt ergibt sich, daß durch die Ausgestaltung der Schnittstelle sehr hohe, gleichmäßig verteilte Spannkräfte aufbaubar sind, die zu einer exakten Verspannung der Schnittstelle führen, so daß einerseits die Wechselgenauigkeit sehr hoch ist und andererseits eine Versteifung der Schnittstelle gewährleistet ist. Dabei ergibt sich eine sehr gleichmäßige Steifigkeit der Schnittstelle bei um 90° versetzt in den Einsteckkörper eingeleitete Druckkräfte. Dabei sind die zur Betätigung der Spannschraube aufzubringenden Kräfte gegenüber den erreichbaren Spannkräften sehr gering.

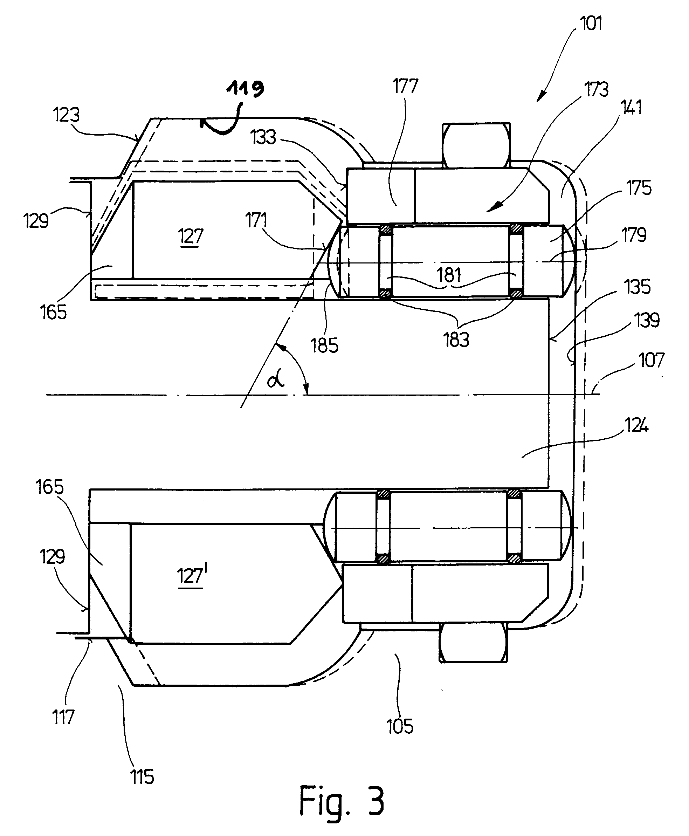

Figur 3 zeigt einen Längsschnitt durch eine Schnittstelle 101, wobei der Schnitt durch die Drehachse 107 geführt ist.

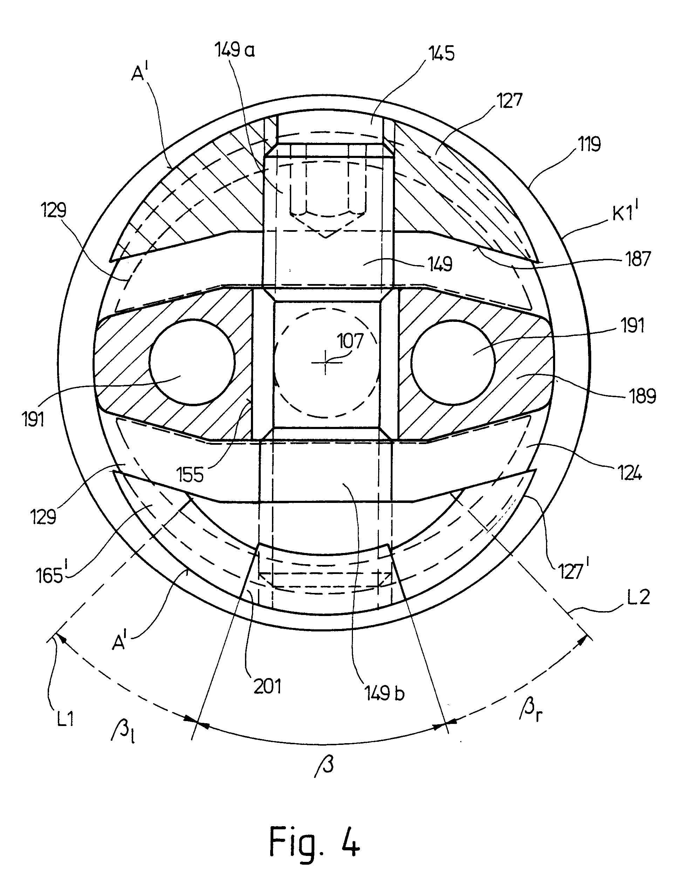

Die Schnittstelle weist einen einen Hohlschaft aufweisenden Einsteckkörper 105 auf. Im Inneren des als Preßzapfen 115 bezeichneten Hohlschaft, der auch aus Figur 1 ersichtlich it, ist ein von einer Innenfläche 117 begrenzter Hohlraum vorgesehen. In diesen ist ein auch als Spannpatrone bezeichneter Spanndorn 124 eingebracht, der oben und unten mit je einer Nut 129 versehen ist. In den Nuten 129 liegen Spannkörper 127 und 127', die von einer senkrecht zur Drehachse 107 verlaufenden als Betätigungseinrichtung dienenden Spannschraube 149 (siehe Figur 4) durchdrungen werden, die mit einem Links-rechts-Gewinde versehen ist. Die Gewindeabschnitte kämmen mit entsprechenden Innengewinden in den Spannkörpern 127, so daß diese bei einer Drehung der Spannschraube in radialer Richtung, das heißt, senkrecht zur Drehachse 107, nach innen beziehungsweise außen verlagert werden. In Figur 3 ist oberhalb der Drehachse 107 die mögliche Verlagerung des Spannkörpers 127 durch gestrichelte Linien angedeutet.

In dem hohlen, als Paßzapfen 115 bezeichneten Bereich des Einsteckkörpers 105 ist in dessen Innenfläche 117 eine Ringnut 119 eingebracht, die eine Anlagefläche 123 aufweist. Diese ist auf der Seite der Ringnut 119 angeordnet, die der Stirnseite, die in Figur 3 nicht ersichtlich ist (siehe hierzu Figur 1), des Paßzapfens zugewandt ist. Bei einer Verlagerung der Spannkörper 127 bzw. 127' radial nach außen liegt die Anlagefläche 123 an einer als Spannfläche 165 bezeichneten zweiten Anlagefläche an, die auf dem Spannkörper 127 vorgesehen ist. Durch das Zusammenwirken der Anlagefläche 123 mit der Spannfläche 165 wird eine in Richtung der Drehachse 107 wirkende Kraftkomponente auf den Einsteckkörper 105 aufgebaut, der dadurch in das Innere des hier nicht wiedergegebenen Aufnahmekörpers hereingezogen wird. Zur Ausübung dieser Spannkraft ist der Spanndorn 124 fest mit dem Aufnahmekörper verbunden. Beim Verspannen der beiden der Schnittstelle 101 zugeordneten Teile befinden sich also gemäß der oberen Darstellung in Figur 3 die Spannkörper 127 in ihrer maximal äußeren, radial nach außen verlagerten Stellung, die gestrichelt oberhalb der Drehachse 107 eingezeichnet ist.

Zum Lösen der Verspannung werden die Spannkörper 127 und 127' durch Betätigung der Spannschraube 149 in Richtung auf die Drehachse 107 des Spanndorns 124 verlagert. Dabei werden auch Ausstoßflächen 171 der Spannkörper 127 und 127' in Richtung auf die Drehachse 107 verlagert. Die Ausstoßflächen schließen einen stumpfen Winkel α mit der Drehachse 107 ein, der sich in Figur 3 nach rechts öffnet.

Die Ausstoßflächen 171 wirken mit einer Ausstoßvorrichtung 173 zusammen, die ein als Stift 175 ausgebildetes Ausstoßelement aufweist. Der Stift 175 ist in einer Bohrung untergebracht, die in einen Ringschulterbereich 177 des Spanndorns 124 eingebracht ist. Die Mittelachse 179 der Bohrung bzw. des Stifts 175 verläuft hier im wesentlichen parallel zur Drehachse 107. Der Stift kann auf geeignete Weise gegen Herausfallen gesichert sein, hier sind beispielhaft zwei in geeignete Ringnuten 181 eingebrachte O-Ringe 183 aus elastischem Material vorgesehen. Aus dem folgenden ist ersichtlich, daß die Sicherung gegen Herausfallen eine Bewegung des Stifts 175 in Richtung der Mittelachse 179 ermöglichen muß. Es ist beispielsweise auch möglich, einen senkrecht auf der Mittelachse 179 angeordneten Sicherungsstift vorzusehen, der in ein in den Stift 175 eingebrachtes Langloch eingreift.

Die Dimensionen des Stifts 175 und die Tiefe der Ringnuten 181 sind so auf den Durchmesser der den Stift aufnehmenden Bohrung abgestimmt, daß der Stift eine Translationsbewegung in Richtung seiner Mittelachse 179 ausführen aber nicht ohne weiteres aus dem Spanndorn herausfallen kann. Die Anzahl der O-Ringe kann an den Einzelfall angepaßt werden. Es mag auch sein, daß ein einziger O-Ring zu Sicherung des Stifts ausreicht.

Der Stift 175 ist so lang gewählt, daß er die Stirnseite 135 des Spanndorns zumindest dann überragt, wenn die Spannkörper 127 bzw. 127' in ihre innere Stellung verlagert sind, in welcher sie einen minimalen Abstand zur Drehachse 107 aufweisen. Dabei liegen die Stifte 175 mit ihrem inneren Ende 185 an der Ausstoßfläche 171 an.

Das innere Ende 185 des Stifts 175, das mit der Ausstoßfläche 171 zusammenwirkt, kann ebenfalls mit einer Schrägfläche bzw. Anlauffläche versehen werden. In diesem Fall müßte eine Sicherung gegen Verdrehen des Stifts vorgesehen sein, damit eine exakte Zuordnung der Ausstoßflächen sichergetellt ist. Es ist auch möglich, daß, wie in Figur 3 dargestellt, daß innere Ende 185 des Stifts 175 abgerundet ist, so daß unabhängig von der Anordnung des Stifts, also unabhängig von einer Verdrehung um die Mittelachse 179, ausreichende Ausstoßkräfte aufgebaut werden, wenn der Spannkörper 127 in seine Entriegelungslage gebracht wird.

Das gegenüberliegende, über die Stirnseite 135 des Spanndorns 124 hinausragende Ende des Stifts 175 kann eine senkrecht zur Mittelachse 179 verlaufende ebene Fläche oder eine gewölbte Oberfläche aufweisen, die vorzugsweise eine Kugelabschnittsform aufweist.

Es zeigt sich also, daß die Ausstoßvorrichtung 173 betätigt wird, wenn die Spannkörper 127 bzw. 127' durch Drehung der Spannschraube 149 in ihre Entriegelungsstellung verlagert werden, in welcher sie den geringsten Abstand zur Drehachse 107 aufweisen. Gleichzeitig gelangen die Ausstoßflächen 171 der Spannkörper mit dem inneren Ende 185 der Stifte 175 in Eingriff, während die Spannkörper mittels der Spannschraube verlagert werden. Die Spannkörper drücken also bei der Verlagerung in die Entriegelungsstellung die Stifte 175 weiter aus der Stirnseite 135 des Spanndorns 124 heraus, so daß sich die Stifte 175 am Grund 139 des Raumes 141 im hohlen Paßzapfen 115 abstützen können. Durch die axiale Verlagerung der Stifte 175 wird also eine Schubkraft auf den Spanndorn 124 ausgeübt, so daß dieser nach links aus dem Inneren des Paßzapfens 115 hinausgeschoben wird. Gleichzeitig wird auf diese Weise der Paßzapfen 115 des Einsteckkörpers 105 aus dem Aufnahmekörper herausgedrückt.

Die Spannkörper 127 dienen also einerseits der Verspannung der beiden der Schnittstelle 101 zugeordneten Teile und andererseits dem Ausstoßen des Einsteckkörpers aus dem Aufnahmekörper.

In Figur 3 ist eine Schnittstelle 101 dargestellt, die zwei Stifte 175 aufweist. Es ist jedoch vorteilhafter Weise möglich, lediglich eine Ausstoßvorrichtung 173 vorzusehen und damit den Aufbau der Schnittstelle zu vereinfachen. Es ist in diesem Fall auch nur erforderlich, einen der Spannkörper mit einer Ausstoßfläche 171 zu versehen. Um zu vermeiden, daß die beiden Spannkörper vertauscht werden, können die Nuten 129 und die zugehörigen Spannkörper verschieden breit ausgelegt werden. Auf diese Weise ist eine eindeutige Zuordnung möglich. Dies läßt sich beispielsweise auch durch Einbringungen von Paßstiften und entsprechenden Ausnehmungen in den Nuten bzw. den Spannkörpern erreichen.

Aus der in Figur 4 wiedergegebenen Querschnitt-Darstellung ist die Form der Spannkörper 127 und 127' des in Figur 3 dargestellten Ausführungsbeispiels deutlich erkennbar. Die beiden Spannkörper sind mittels der Spannschraube 149 in ihre äußere Stellung verlagert, so daß sie die äußere Kontur des Spanndorns 124 überragen und in die in die Innenfläche des Paßzapfens eingebrachte Ringnut 119 eingreifen, deren Innenfläche durch eine Kreislinie K1' angedeutet ist.

In Figur 4 ist gestrichelt eingezeichnet, wie die Spannkörper 127 und 127' in der Entriegelungsstellung angeordnet sind. Es zeigt sich, daß diese dann mit ihrer der Drehachse 107 zugewandten Innenfläche 187 an einem Mittelsteg 189 des Spanndorns 124 anliegen. Die Innenfläche 187 und die Außenfläche des Mittelstegs 189 sind komplementär ausgebildet. Die Höhe der Spannkörper 127 ist so gewählt, daß diese vollständig im Inneren der Nut 129 angeordnet sind, wenn sie sich in ihrer Entriegelungsstellung befinden, also ganz nach innen in Richtung auf die Drehachse 107 eingezogen sind.

Die Außenfläche A' der Spannkörper 127 und 127' ist so gewählt, daß diese im Bereich der die Spannschraube 149 aufnehmenden Bohrung 145 so abgeflacht ist, daß die Spannkörper die Anlagefläche 123 nur mit den Bereichen der Außenfläche A' berühren, die in einem Abstand zur Bohrung 145 angeordnet sind. Auf diese Weise ergibt sich quasi eine Vier-Flächen-Anlage, bei der Betätigung bzw. Verspannung der Spannkörper 127 und 127'. Aufgrund dieser Verspannung wird der dünnwandige hohle Paßzapfen beim Verriegeln der Schnittstelle 101 aufgeweitet und liegt sehr gut an der Wandung der den Paßzapfen aufnehmenden Ausnehmung im Aufnahmekörper an.

In Figur 4 ist der obere Spannkörper 127 im Schnitt, der untere Spannkörper 127' in Draufsicht dargestellt. Es ist daher dessen Spannfläche 165' deutlich erkennbar, die in ihrem Scheitelbereich, also in dem Bereich, in dem die Bohrung 145 die Außenfläche A' des unteren Spannkörpers 127' durchdringt, mit einer Ausnehmung 201' versehen, die durch eine in die Oberfläche des Spannkörpers beziehungsweise in dessen Spannfläche 165' eingebrachte Vertiefung hergestellt wird. Die seitlichen Begrenzungsflächen der Ausnehmung 201' verlaufen in radialer Richtung, das heißt, ihre Verlängerungen schneiden etwa die Drehachse 107. Sie schließen einen Öffnungswinkel β ein, der im Bereich von 60° bis 20° liegen kann. Als ganz besonders vorteilhaft hat sich ein Öffnungswinkel β von ca. 40° herausgestellt.

Rechts und links von der Ausnehmung 201' sind durch gestrichelte Linien Bereiche abgegrenzt, in denen der Spannkörper 127' bei Verlagerung in seine Verriegelungsstellung an der Innenseite des Paßzapfens, das heißt, an dessen Anlagefläche 127 anliegt. Die Anlagebereiche erstrecken sich rechts und links von der Ausnehmung über einen Bereich, der durch die gestrichelt eingezeichneten Öffnungswinkel βₗ und βᵣ gekennzeichnet sind. Sie werden durch Kreisbogensegmente auf der Außenfläche des Spannkörpers beziehungsweise der Spannfläche 165' kennzeichnen, deren Öffnungswinkel βₗ etwa 15° bis 30° beträgt, bevorzugt jedoch 20° bis 25°. Entsprechendes gilt für den Anlagebereich rechts der Ausnehmung 21. Er läßt sich durch gedachte Linien kennzeichnen, die die Drehachse 107 schneiden und einerseits die seitliche Begrenzungskante der Ausnehmung 201' durchlaufen und andererseits in einem Abstand dazu verlaufen, so daß ein Öffnungswinkel βᵣ eingeschlossen wird. Dieser liegt ebenfalls im Bereich von 15° bis 30°, bevorzugt jedoch im Bereich von 20° bis 25°. Die Anlagebereiche liegen also symmetrisch zur Ausnehmung 201' und bilden quasi Kreisringsegmente, die einerseits durch die Seitenkanten der Ausnehmung 201' und andererseits durch gedachte Linien L1 und L2 begrenzt werden, wobei die Außenkanten der Ausnehmung 201' mit der Linie L1 den Winkel βₗ und die gegenüberliegende Außenkante der Ausnehmung 201' mit der Linie L2 den Winkel βᵣ einschließen.

Die Außenflächen der Spannkörper sind vorzugsweise so ausgebildet, daß diese die Innenfläche des Paßzapfens jenseits der Anlagebereiche, die durch die Winkel βₗ und βᵣ gekennzeichnet sind, nicht mehr berühren.

Der in Figur 4 oben dargestellte Spannkörper 127 ist -in Draufsicht gesehen- identisch ausgebildet wie der Spannkörper 127'.

Aus der Darstellung gemäß Figur 4 ist ersichtlich, daß die Nuten 129 im Spanndorn 124 durch den Mittelsteg 189 voneinander getrennt sind. Im Inneren des Mittelstegs sind im wesentlichen parallel zur Drehachse 107 verlaufende Kanäle 191 vorgesehen, durch die ein Kühl- bzw. Schmiermittel geleitet werden kann. Die Kanäle 191 stehen mit in den Figuren nicht wiedergegebenen Durchführungen für Kühl- und Schmiermittel in Verbindung, so daß der Spanndorn 124 in Längsrichtung von einem Kühl- und Schmiermittel durchströmt werden kann. Dabei ist auf bekannte Weise sicherzustellen, daß dieses nicht seitlich am Spanndorn entweichen und aus der Schnittstelle 101 austreten kann.

Durch den Mittelsteg 189 wird dem Spanndorn 124 eine sehr große Stabilität verliehen, so daß die von den Spannkörpern 127 und 127' aufgenommenen und in die Nutflanke 133 eingeleiteten Spannkräfte sicher übertragen werden, ohne daß es zu wesentlichen Verformungen des Spanndorns kommt. Damit lassen sich sehr exakt vorherbestimmbare Spannkräfte erzeugen und eine überaus große Wiederholungsgenauigkeit beim Austausch der der Schnittstelle 101 zugeordneten Teile erreichen.

Figur 4 zeigt noch, daß der Spanndorn 124 von einer Durchgangsbohrung 155 durchdrungen wird, durch die Spannschraube 149 geführt ist. Die Spannschraube hat, wie oben bereits erwähnt, gegenläufige Gewindeabschnitte 149a und 149b, die den entgegengesetzten Spannkörper 127 und 127' zugeordnet sind und der radialen Verlagerung der Spannkörper bei einer Drehung der Spannschraube 149 dienen.

Die Ausgestaltung der Konturen der Spannkörper ist insofern frei wählbar, als die Innenfläche 187, die hier im wesentlichen einer Trapezform nachempfunden ist, frei ausgestaltet werden kann. Es ist beispielsweise auch möglich, daß die -in Vorderansicht betrachtet- Spannkörper kreisabschnittförmig ausgebildet sind. Wesentlich ist, daß der im Bereich der Bohrung 145 vorgesehene Teil des Grundkörpers der Spannkörper sehr stabil ausgebildet ist, so daß hohe Spannkräfte übertragen werden können.

Figur 5 zeigt eine erste perspektivische Ansicht eines Spannkörpers, wie er in den Figuren 3 und 4 erläutert wurde.

In die Vorderseite 193 des Spannkörpers, die in Figur 3 rechts angeordnet ist, ist eine Ausnehmung eingebracht, die sich durch eine als Ausstoßfläche 171 bezeichnete Schrägfläche auszeichnet. Diese wird durch eine keilförmige Ausnehmung in der Vorderseite 193 des Spannkörpers 127 gebildet.

Die Breite der Ausnehmung ist so gewählt, daß der Stift 175 der Ausstoßvorrichtung 173 ungehindert an der Ausstoßfläche 171 anliegen kann.

Der Spanndorn 124 kann auf seiner den Stiften 175 gegenüberliegenden -hier nicht dargestellten- Seite mit zwei gegenüber der Drehachse 107 radial verlaufenden Ansätzen bzw. Flügeln versehen werden, die eine Bajonettverriegelung des Spanndorns im Inneren des Aufnahmekörpers ermöglichen. Zusätzlich kann eine Verriegelungseinrichtung vorgesehen werden, die die Flügel in der Verriegelungsstellung halten, wenn der Spanndorn 124 im Aufnahmekörper eingesetzt ist. Um eine eindeutige Orientierung des Spanndorns im Inneren des Aufnahmekörpers zu gewährleisten, können die Flügel bzw. die Ansätze verschieden breit sein und verschieden breiten Ausnehmungen im Inneren des Aufnahmekörpers zugeordnet werden.

In Figur 6 ist eine zweite perspektivische Ansicht des Spannkörpers 127' wiedergegeben, die quasi der Rückansicht des in Figur 5 wiedergegebenen Spannkörper 127 entspricht. Bei dieser Darstellung ist einerseits die einem Kreisbogen folgende Außenfläche A' erkennbar, die im Bereich des Scheitels des Spannkörpers 127' von der Bohrung 145' durchdrungen wird. Die auf dieser Seite des Spannkörpers 127' vorgesehne Spannfläche 165' ist im wesentlichen mondsichelförmig ausgebildet, das heißt, sie wird durch zwei Kreisbogensegmente begrenzt. Sie verläuft unter einem Winkel gegenüber der Außenfläche A', wie aus Figur 3 ersichtlich. Die Spannfläche 165' ist nicht durchgehend ausgebildet. Im Bereich des Scheitels ist eine Ausnehmung 201' vorgesehen, die eine Unterbrechung der Spannfläche 165' darstellt. Statt der Ausnehmung kann hier auch eine Abflachung vorgesehen werden, sofern gewährleistet ist, daß hier eine Unterbrechung der Spannfläche gegeben ist.

Die seitlichen Begrenzungskanten der Ausnehmung 201' schließen einen Winkel ein, der in Figur 4 mit β bezeichnet wurde. Rechts und links von der Ausnehmung liegen die Anlageflächen des Spannkörpers 127', was durch gestrichelte Linien in Figur 6 und durch die Linien L1 beziehungsweise L2 in Figur 4 angedeutet wurde. Die Spannkörper sind so ausgebildet, daß -vom Scheitel aus gesehen- jenseits der Anlageflächen die Spannflächen 165' nicht mehr mit der Innenfläche des Paßzapfens in Berührung kommen, wenn die Spannkörper in ihre äußere Verriegelungsstellung verlagert werden.

Es wird also deutlich, daß beide Spannkörper zwei voneinander getrennte, im wesentlichen symmetrisch gegenüber dem Scheitel angeordnete Anlagebereiche aufweisen, die gegen die Innenfläche des Paßzapfens gedrückt werden. Die Anordnung der Anlageflächen kann durch die Breite der Ausnehmung 201' verändert werden, auch deren Breite ist selbstverständlich variabel.

Wenn jedoch die Anlageflächen zu weit nach außen, also in einem größeren Abstand zum Scheitel der Spannkörper, angeordnet werden, ergeben sich reduzierte, in Richtung der Drehachse 7 beziehungsweise 107 der Schnittstelle wirkende Spannkräfte. Allerdings reduziert sich die Verformung des Paßzapfens bei einer derartigen Anordnung der Anlageflächen. Ein optimaler Kompromiß zwischen einer minimalen Verformung des Paßzapfens und einer maximalen Einspannkraft ergibt sich durch die im Zusammenhang mit Figur 4 erläuterten Winkelbereiche für den Winkel β den Winkel βₗ und den Winkel βᵣ.

Durch die Beaufschlagung der Innenfläche des Paßzapfens mit Spannkräften in vier Bereichen ergibt sich die hier gewünschte Vier-Flächen-Anlage, aufgrund derer eine sehr stabile Verspannung der Teile der Schnittstelle sichergestellt ist. Insbesondere zeigt sich, daß Werkzeuge, die im Zusammenhang mit einer derartigen Schnittstelle verwendet werden, eine sehr gleichmäßige Steifigkeit gegenüber Belastungen aufweisen, die um 90° versetzt in die Werkzeuge eingeleitet werden. Die Steifigkeit ist also quasi rundum gleich.

Dies führt zu einem sehr runden Lauf eines im Zusammenhang mit dieser Schnittstelle verwendeten Werkzeugs auch bei sehr hoher Umdrehungsgeschwindigkeit von mehr als 1000 U/min beziehungsweise bei hohen Schnittgeschwindigkeiten von mehr als 800 m/min. Diese Schwingungsarmut ist zurückzuführen auf die flächige Berührung der Außenseite des Paßzapfens mit der Innenfläche des Aufnahmekörpers. Der Paßzapfen wird aufgrund seiner Dünnwandigkeit und der dadurch gegebenen elastischen Wandung gleichmäßig aufgeweitet und fest an die Innenfläche des Aufnahmekörpers gepreßt. Dadurch ergibt sich eine optimale Dämpfung, die Schwingungen entgegenwirkt.

Durch die gleichmäßige Verteilung der Spannkräfte kann die Wandung des als Hohlschaft bezeichneten Paßzapfens sehr dünn gewählt werden, ohne daß es zu extremen Verformungen und damit zu Instabilitäten kommt. Durch die exakte Einleitung der Spannkräfte ergibt sich die hohe Spannkraft im Bereich der Schnittstelle, das heißt die radial wirkenden Spannkräfte werden optimal umgesetzt in axial, das heißt, in Richtung der Drehachse verlaufende Spannkräfte.

Aus dem oben Gesagten, ist auch ersichtlich, daß die Schnittstelle 101 sich dadurch auszeichnet, daß die zugehörigen Teile durch Betätigung der Spannkörper 127 und 127' mit Hilfe der Spannschraube 149 einerseits verriegelt werden können und andererseits sichergestellt wird. Die beiden Teile der Schnittstelle können im entriegelten Zustand der Spannkörper mit Hilfe der von den Spannkörpern betätigten Ausstoßvorrichtung sehr leicht auseinandergeschoben werden. Dies ist einerseits für Paßzapfen 115 von Bedeutung, die zylindrisch ausgebildet sind, weil die beiden Teile der Schnittstelle durch Verschmutzung aneinander haften könnten. Andererseits ist die Ausstoßvorrichtung von besonderer Wichtigkeit, wenn der Paßzapfen eine konische Außenfläche aufweist, die mit einer entsprechenden konischen Ausnehmung im Aufnahmekörper zusammenwirkt. Häufig wird nach dem Verspannen der beiden Teile der Schnittstelle festzustellen sein, daß aufgrund einer Selbsthemmung die beiden Teile der Schnittstelle nur schwerlich trennbar sind. Derartige Nachteile lassen sich durch die Ausstoßvorrichtung sehr leicht überwinden.

Nach allem zeigt sich auch, daß der Spannkörper insbesondere bei der Ausgestaltung mit einer Bajonettverriegelung leicht austauschbar ist. Aus Figur 3 ist ersichtlich, daß die Spannkörper im verriegelten Zustand der Schnittstelle 101 einerseits an der Anlagefläche 123 anliegen und sich andererseits an der rechten Nutflanke 133 der Nut 129 abstützen. Dabei können Verschleißerscheinungen nicht nur an den Spannkörpern sondern eben auch an der rechten Nutflanke des Spanndorns auftreten, die einen Austausch des Spanndorns erzwingen. Dies ist bei der angesprochenen Ausgestaltung des Spanndorns besonders leicht möglich, so daß Zeitverluste bei der Instandsetzung der Schnittstelle auf ein Minimum reduzierbar sind.

## Patentansprüche

1. Spanneinrichtung zwischen einem Aufnahmekörper (3) und einem Einsteckkörper (5, 105) insbesondere zwischen einem Werkzeugträger und einem den Werkzeugträger haltenden Spannschaft einer Werkzeugmaschine, mit einem am Einsteckkörper (5, 105) vorgesehenen hohlen Paßzapfen (15, 115) mit einer der Aufnahme des Paßzapfens dienenden Ausnehmung (11) in der Stirnseite des Aufnahmekörpers (3) und mit einer dem Aufnahmekörper (3) zugeordneten an der Innenfläche des Paßzapfens (15, 115) eingreifenden Spannvorrichtung, (25, 124), **dadurch gekennzeichnet**, daß die Spannvorrichtung (25, 124) nur zwei am Aufnahmekörper (3) angebrachte Spannkörper (27, 27' bzw. 127, 127') aufweist, die mittels einer Betätigungseinrichtung (49, 149) in zueinander entgegengesetzten Richtungen verlagerbar sind und deren Spannflächen 65, 165) im Bereich des Scheitels der Spannkörper (27, 27', bzw. 127, 127') eine Abflachung oder Ausnehmung (201, 201') aufweisen, so daß die zu dem Scheitel in einem Abstand angeordneten Bereiche der Spannflächen beim Verspannen der Spannkörper (27, 27' bzw 127, 127') die Anlagefläche (23, 123) des Paßzapfens (15, 115) vor dem Scheitel der Spannkörper (27, 27' bzw. 127, 127') berühren und somit eine Vier-Flächen-Spannung gewährleisten.

2. Spanneinrichtung nach Anspruch 1, **dadurch gekennzeichnet**, daß die Spannkörper (27, 27', 127, 127') gleich und vorzugsweise in sich symmetrisch ausgebildet sind.

3. Spanneinrichtung nach einem der vorhergehenden Ansprüche, **dadurch gekennzeichnet**, daß die Spannkörper (27, 27') an einem in die Ausnehmung (11) des Aufnahmekörper (3) und -im zusammengesetzten Zustand der Spanneinrichtung (1)- in den Paßzapfen (15) ragenden Spanndorn (24) angebracht sind.

4. Spanneinrichtung nach einem der vorhergehenden Ansprüche, **dadurch gekennzeichnet**, daß die Spannkörper (27, 27', 127, 127') eine im wesentlichen kreisbogenförmige Außenfläche (A, A') aufweisen, die sich über einen Kreisbogen mit einem Öffnungswinkel von 90° bis 180° und vorzugsweise von 180° erstreckt.

5. Spanneinrichtung nach einem der vorhergehenden Ansprüche, **dadurch gekennzeichnet**, daß die Spannkörper (27,27') den Spanndorn (24) zumindest bereichsweise umgreifen.

6. Spanneinrichtung nach einem der vorhergehenden Ansprüche, **dadurch gekennzeichnet**, daß die Spannkörper (27,27') in einer in die Außenfläche (31) des Spanndorns (24) eingebrachten, diesen radial zumindest bereichsweise umlaufenden Nut (29) angeordnet sind.

7. Spanneinrichtung nach einem der vorhergehenden Ansprüche**, dadurch gekennzeichnet**, daß die Betätigungseinrichtung als jeweils einem Spannkörper (27,27') zugeordnete Spannschraube ausgebildet ist.

8. Spanneinrichtung nach einem der vorhergehenden Ansprüche, **dadurch gekennzeichnet**, daß die Betätigungseinrichtung als eine Spannschraube (49) ausgebildet ist, die in einer den Spanndorn (24) radial durchdringenden Durchgangsbohrung (55) verläuft und mit je einem Gewindeabschnitt (49a,49b) mit einem Innengewinde in den Spannkörpern (27,27') zusammenwirkt, wobei die Gewinde der beiden Gewindeabschnitte (49a,49b) gegensinnig verlaufen.

9. Spanneinrichtung nach einem der vorhergehenden Ansprüche, **gekennzeichnet durch** eine durchgehende Kühl- und Schmiermittelzufuhr, die den Aufnahmekörper (3) und den Einsteckkörper (5) durchdringende Kanalabschnitte und mindestens einen die Spannvorrichtung (25) überbrückenden Leitungsabschnitt (57) aufweist.

10. Spanneinrichtung nach Anspruch 9, **dadurch gekennzeichnet**, daß der Leitungsabschnitt (57) ein zwischen den Spannkörpern (27,27') geführtes Rohr umfaßt.

11. Spanneinrichtung nach einem der vorhergehenden Ansprüche, **dadurch gekennzeichnet**, daß die Spannkörper (27,27') halbkreisförmig gebogen sind und mindestens auf einer Seite an ihren einander zugewandten Stirnseiten (61) mit Ausnehmungsbereichen (63) versehen sind, die der Aufnahme des Leitungsabschnitts (57) dienen.

12. Spanneinrichtung nach einem der vorhergehenden Ansprüche, **dadurch gekennzeichnet**, daß eine von der Spannvorrichtung (124;127;149) betätigbare Ausstoßvorrichtung (173) vorgesehen ist, die der Lösung des Einsteckkörpers und des Aufnahmekörpers (115) der Spanneinrichtung (101) dient.

13. Spanneinrichtung nach Anspruch 12, **dadurch gekennzeichnet**, daß die Ausstoßvorrichtung (173) ein von den Spannkörpern (127, 127') der Spannvorrichtung betätigbares Ausstoßelement (175) aufweist, durch welches der Einsteckkörper im entspannten Zustand der Spanneinrichtung (101) aus dem Aufnahmekörper (115) herausschiebbar ist.

14. Spanneinrichtung nach Anspruch 1 oder 2, **dadurch gekennzeichnet**, daß mindestens ein Spannkörper (127) mit einer mit dem Ausstoßelement (175) zusammenwirkenden Ausstoßfläche (171) versehen ist.

15. Spanneinrichtung nach einem der vorangehenden Ansprüche, **dadurch gekennzeichnet**, daß das Ausstoßelement als Stift (175) ausgebildet ist, der gegen Herausfallen sicherbar ist.

16. Spanneinrichtung nach Anspruch 15, **dadurch gekennzeichnet**, daß der Stift (175) durch mindestens einen elastischen O-Ring (183) sicherbar ist.

17. Spanneinrichtung nach einem der vorhergehenden Ansprüche, **dadurch gekennzeichnet**, daß der Stift (175) im Inneren der Spanneinrichtung (101), vorzugsweise in einem Spanndorn (124) der Spannvorrichtung geführt ist.

18. Spanneinrichtung nach einem der vorhergehenden Ansprüche, **dadurch gekennzeichnet**, daß die Spannkörper (127, 127') und die die Spannkörper aufnehmenden Nuten (129) im Spanndorn (124) verschieden breit ausgebildet sind.

19. Spanneinrichtung nach einem der vorhergehenden Ansprüche, **dadurch gekennzeichnet**, daß der Spanndorn (124) einen die Nuten (129) trennenden Mittelsteg (189) aufweist, in dem zumindest ein Kanal (191) für ein Kühl- oder Schmiermittel geführt ist.

20. Spanneinrichtung nach einem der vorhergehenden Ansprüche, **dadurch gekennzeichnet**, daß der Spanndorn (124) mit einer Bajonettverriegelung versehen ist, die vorzugsweise Flügel verschiedener Breite aufweist.

21. Spanneinrichtung nach einem der vorhergehenden Ansprüche, **dadurch gekennzeichnet**, daß die Wandung des hohlen Paßzapfens (15, 115) zumindest im Bereich einer in die Innenfläche (17, 117) des Paßzapfens eingebrachten Ringnut (19, 119) dünn und elastisch ausgebildet ist, so daß diese durch die Spannkörper aufweitbar ist.

22. Spanneinrichtung nach einem der vorherigen Ansprüche, **dadurch gekennzeichnet**, daß die Ausnehmung (201), 201') durch zwei gedachte radiale Linien begrenzt wird, die die Drehachse (7, 107) schneiden und einen Winkel (β) von 20° bis 60°, vorzugsweise ca. 40°, einschließen.

23. Spanneinrichtung nach einem der vorherigen Ansprüche, **dadurch gekennzeichnet,** daß angrenzend an die Ausnehmung (201, 201') Anlageflächen angeordnet sind, die Teil der Spannfläche (65, 165) der Spannkörper (27, 27', 127, 127') sind und einerseits von den Seitenkanten der Ausnehmung (201, 201') und andererseits von gedachten, die Drehachse (7, 107) schneidenden Linien (L1, L2) begrenzt werden, die miteinander einen Winkel (βₑ, βᵣ) einschließen, der im Bereich von 15° bis 30°, vorzugsweise von 20° bis 25°, liegt.

## Claims

1. A clamping device between a receiving member (3) and an insertion member (5, 105), in particular between a tool carrier and a machine-tool clamping shaft holding the tool carrier, the clamping device having a hollow fitting pin (15, 115) provided on the insertion member (5, 105), a recess (11) for receiving the fitting pin and being located in the front end of the receiving member (3), and a clamping arrangement (25, 124) associated with the receiving member (3) and engaging on the inner surface of the fitting pin (15, 115), characterised in that the clamping arrangement (25, 124) has only two clamping members (27, 27' or 127, 127') which are secured to the receiving member (3), are displaceable in opposite directions to one another by means of an actuating device (49, 149) and whose clamping surfaces (65, 165) have a flat portion or recess (201, 201') in the region of the apex of the clamping members (27, 27' or 127, 127') so that during tensioning of the clamping members (27, 27' or 127, 127') the regions of the clamping surfaces which are arranged at a distance from the apex make contact with the contact surface (23, 123) of the fitting pin (15, 115) in front of the apex of the clamping members (27, 27' or 127, 127') and consequently ensure clamping involving four surfaces.

2. A clamping device in accordance with Claim 1, characterised in that the clamping members (27, 27', 127, 127') are identical in construction and are preferably each symmetrical.

3. A clamping device in accordance with any one of the preceding Claims, characterised in that the clamping members (27, 27') are secured to a mandrel (24) which projects into the recess (11) of the receiving member (3) and - in the assembled state of the clamping device (1) - projects into the fitting pin (15).

4. A clamping device in accordance with any one of the preceding Claims, characterised in that the clamping members (27, 27', 127, 127') have an outer surface (A, A') substantially in the form of an arc of a circle and extending over an arc of a circle having a span of 90° to 180°, preferably 180°.

5. A clamping device in accordance with any one of the preceding Claims, characterised in that the clamping members (27, 27') grip around at least regions of the mandrel (24).

6. A clamping device in accordance with any one of the preceding Claims, characterised in that the clamping members (27, 27') are arranged in a groove (29) which is made in the outer surface (31) of the mandrel (24) and which extends radially around at least regions of the latter.

7. A clamping device in accordance with any one of the preceding Claims, characterised in that the actuating device is in the form of a clamping screw associated with a respective clamping member (27, 27').

8. A clamping device in accordance with any one of the preceding Claims, characterised in that the actuating device is in the form of a clamping screw (49) which extends in a through bore (55) passing radially through the mandrel (24) and which co-operates with an internal thread in the clamping members (27, 27') by means of a respective threaded portion (49a, 49b), the threads of the two threaded portions (49a, 49b) being opposite-directed.

9. A clamping device in accordance with any one of the preceding Claims, characterised by a continuous cooling agent and lubricant feed having both channel portions passing through the receiving member (3) and the insertion member (5) and at least one line portion (57) bridging the clamping arrangement (25).

10. A clamping device in accordance with Claim 9, characterised in that the line portion (57) comprises a duct guided between the clamping members (27, 27').

11. A clamping device in accordance with any one of the preceding Claims, characterised in that the clamping members (27, 27') are curved in a semicircle and are at at least one side provided with recessed regions (63) at their facing front ends (61), these recessed regions (63) serving to receive the line portion (57).

12. A clamping device in accordance with any one of the preceding Claims, characterised in that there is provided an ejecting device (173) which can be actuated by the clamping arrangement (124; 127; 149) and which serves to disconnect the insertion member and the receiving member (115) of the clamping device (101).

13. A clamping device in accordance with Claim 12, characterised in that the ejecting device (173) has an ejecting element (175) actuatable by the clamping members (127, 127') of the clamping arrangement and by means of which the insertion member can be pushed from the receiving member (115) when the clamping device (101) is in the relaxed state.

14. A clamping device in accordance with Claim 1 or 2, characterised in that at least one clamping member (127) is provided with an ejecting surface (171) co-operating with the ejecting element (175).

15. A clamping device in accordance with any one of the preceding Claims, characterised in that the ejecting element is in the form of a pin (175) which can be secured against falling out.

16. A clamping device in accordance with Claim 15, characterised in that the pin (175) can be secured by means of at least one resilient O-ring (183).

17. A clamping device in accordance with any one of the preceding Claims, characterised in that the pin (175) is guided in the interior of the clamping device (101), preferably in a mandrel (124) of the clamping arrangement.

18. A clamping device in accordance with any one of the preceding Claims, characterised in that the clamping members (127, 127') and the grooves (129) in the mandrel (124) receiving the clamping members differ in width.

19. A clamping device in accordance with any one of the preceding Claims, characterised in that the mandrel (124) has a central crosspiece (189) which separates the grooves (129) and in which at least one channel (191) for a cooling agent or lubricant extends.

20. A clamping device in accordance with any one of the preceding Claims, characterised in that the mandrel (124) is provided with a bayonet-type locking device which preferably has lugs of differing width.

21. A clamping device in accordance with any one of the preceding Claims, characterised in that at least in the region of an annular groove (19, 119) made in the inner surface (17, 117) of the fitting pin, the wall of the hollow fitting pin (15, 115) is thin and resilient so that it can be spread outwards by means of the clamping members.

22. A clamping device in accordance with any one of the preceding Claims, characterised in that the recess (201, 201') is bounded by two imaginary radial lines which intersect the rotational axis (7, 107) and form an angle (β) of 20° to 60°, preferably approximately 40°.

23. A clamping device in accordance with any one of the preceding Claims, characterised in that adjacent to the recess (201, 201') there are arranged contact surfaces which are part of the clamping surface (65, 165) of the clamping members (27, 27', 127, 127') and are bounded on the one hand by the lateral edges of the recess (201, 201') and on the other hand by imaginary lines (L1, L2) which intersect the rotational axis (7, 107) and together form an angle (βₑ, βᵣ) which is in the region of 15° to 30°, preferably 20° to 25°.

## Revendications

1. Dispositif de serrage entre un corps de réception (3) et un corps d'enfoncement (5, 105), notamment entre un support d'outil et une tige de serrage d'une machine-outil maintenant le support d'outil, comprenant un tenon d'ajustage creux (15, 115) prévu sur le corps d'enfoncement (5, 105), un évidement (11) dans la face frontale du corps de réception (3) servant à recevoir le tenon d'ajustage, et un dispositif de serrage (25, 124) associé au corps de réception (3) et se mettant en prise avec la surface intérieure du tenon d'ajustage (15, 115), caractérisé en ce que le dispositif de serrage (25, 124) ne présente que deux corps de serrage (respectivement 27, 27' et 127, 127') fixés sur le corps de réception (3), qui peuvent être déplacés en sens inverse l'un par rapport à l'autre au moyen d'un dispositif d'actionnement (49, 149) et dont les surfaces de serrage (65, 165) présentent, dans la zone du sommet du corps de serrage (respectivement 27, 27' et 127, 127'), un aplatissement ou un évidement (201, 201'), si bien qu'en serrant les corps de serrage (respectivement 27, 27' et 127, 127'), les zones des surfaces de serrage placées à distance du sommet touchent les surfaces de contact (23, 123) du tenon d'ajustage (15, 115) avant le sommet des corps de serrage (respectivement 27, 27' et 127, 127') et garantissent ainsi un serrage par quatre surfaces.

2. Dispositif de serrage selon la revendication 1, caractérisé en ce que les corps de serrage (27, 27', 127, 127') sont identiques et sont, de préférence, réalisés de façon symétrique en soi.

3. Dispositif de serrage selon l'une des revendications précédentes, caractérisé en ce que les corps de serrage (27, 27') sont fixés sur un mandrin de serrage (24) pénétrant dans l'évidement (11) du corps de réception (3) et - lorsque le dispositif de serrage (1) est assemblé - dans le tenon d'ajustage (15).

4. Dispositif de serrage selon l'une des revendications précédentes, caractérisé en ce que les corps de serrage (27, 27', 127, 127') présentent une surface extérieure (A, A') approximativement essentiellement en forme d'arc de cercle, qui s'étend sur un arc de cercle avec un angle d'ouverture compris entre 90° et 180° et, de préférence, de 180°.

5. Dispositif de serrage selon l'une des revendications précédentes, caractérisé en ce que les corps de serrage (27, 27') entourent au moins partiellement le mandrin de serrage (24).

6. Dispositif de serrage selon l'une des revendications précédentes, caractérisé en ce que les corps de serrage (27, 27') sont disposés dans une rainure (29) ménagée dans la surface extérieure (31) du mandrin de serrage (24) et entourant ce dernier au moins partiellement dans la direction radiale.

7. Dispositif de serrage selon l'une des revendications précédentes, caractérise en ce que le dispositif d'actionnement est réalisé sous la forme d'une vis de serrage associée chaque fois à un corps de serrage (27, 27').

8. Dispositif de serrage selon l'une des revendications précédentes, caractérisé en ce que le dispositif d'actionnement est réalisé sous la forme d'une vis de serrage (49) qui s'étend dans un perçage de passage (55) traversant radialement le mandrin de serrage (24) et coopère chaque fois avec une partie filetée (49a, 49b) avec un taraudage dans les corps de serrage (27, 27'), sachant que les filets des deux parties filetées (49a, 49b) s'étendent en sens inverse.

9. Dispositif de serrage selon l'une des revendications précédentes, caractérisé par une alimentation continue en agent refroidissant et lubrifiant, qui présente des portions de canal traversant le corps de réception (3) et le corps d'enfoncement (5) et au moins une portion de conduite (57) passant par-dessus le dispositif de serrage (25).

10. Dispositif de serrage selon la revendication 9, caractérisé en ce que la portion de conduite (57) comprend un tuyau passant entre les corps de serrage (27, 27').

11. Dispositif de serrage selon l'une des revendications précédentes, caractérisé en ce que les corps de serrage (27, 27') sont courbés en forme de demi-cercle et sont munis au moins sur un côté de leurs surfaces frontales (61) tournées l'une vers l'autre de zones évidées (63) destinées à recevoir la portion de conduite (57).

12. Dispositif de serrage selon l'une des revendications précédentes, caractérisé en ce qu'est prévu un dispositif d'éjection (173) pouvant être actionné par le dispositif de serrage (124; 127; 149), lequel sert à détacher le corps d'enfoncement et le corps de réception (115) du dispositif de serrage (101).

13. Dispositif de serrage selon la revendication 12, caractérisé en ce que le dispositif d'éjection (173) présente un élément d'éjection (175) pouvant être actionné par les corps de serrage (127, 127') du dispositif de serrage, qui permet, lorsque le dispositif de serrage (101) est desserré, de faire glisser le corps d'enfoncement hors du corps de réception (115).

14. Dispositif de serrage selon la revendication 1 ou 2, caractérisé en ce qu'au moins un corps de serrage (127) est muni d'une surface d'éjection (171) coopérant avec l'élément d'éjection (175).

15. Dispositif de serrage selon l'une des revendications précédentes, caractérisé en ce que l'élément d'éjection est réalisé sous la forme d'un goujon (175) qui peut être assuré pour éviter qu'il ne tombe.

16. Dispositif de serrage selon la revendication 15, caractérisé en ce que le goujon (175) peut être assuré par au moins un joint torique d'étanchéité élastique (183).

17. Dispositif de serrage selon l'une des revendications précédentes, caractérisé en ce que le goujon (175) est guidé à l'intérieur du dispositif de serrage (101), de préférence dans un mandrin de serrage (124) du dispositif de serrage.

18. Dispositif de serrage selon l'une des revendications précédentes, caractérisé en ce que les corps de serrage (127, 127') et les rainures (129) du mandrin de serrage (124) recevant les corps de serrage sont réalisés avec différentes largeurs.

19. Dispositif de serrage selon l'une des revendications précédentes, caractérisé en ce que le mandrin de serrage (124) présente une nervure centrale (189) séparant les rainures (129), dans laquelle est guidé au moins un canal (191) pour un agent refroidissant ou lubrifiant.

20. Dispositif de serrage selon l'une des revendications précédentes, caractérisé en ce que le mandrin de serrage (124) est muni d'un verrouillage à baïonnette qui présente, de préférence, des ailes de différentes largeurs.

21. Dispositif de serrage selon l'une des revendications précédentes, caractérisé en ce que la paroi du tenon d'ajustage creux (15, 115) est réalisée de façon mince et élastique au moins dans la zone d'une rainure annulaire (19, 119) ménagée dans la surface intérieure (17, 117) du tenon d'ajustage, de sorte que celle-ci peut être élargie par les corps de serrage.

22. Dispositif de serrage selon l'une des revendications précédentes, caractérisé en ce que l'évidement (201, 201') est délimité par deux lignes radiales imaginaires qui coupent l'axe de rotation (7, 107) et forment un angle (β) compris entre 20° et 60°, de préférence d'environ 40°.

23. Dispositif de serrage selon l'une des revendications précédentes, caractérisé en ce que des surfaces de contact sont disposées de façon adjacente à l'évidement (201, 201'), lesquelles font partie de la surface de serrage (65, 165) des corps de serrage (27, 27', 127, 127') et sont délimitées, d'une part, par les arêtes latérales de l'évidement (201, 201') et, d'autre part, par des lignes imaginaires (L1, L2) coupant l'axe de rotation (7, 107) qui forment entre elles un angle (βₑ, βᵣ) compris entre 15° et 30°, de préférence entre 20° et 25°.
